# EUROPEAN PATENT APPLICATION

(11) **EP 4 451 411 A1**
(43) Date of publication of application: **23.10.2024**
(21) Application number: 23907683.9
(22) Date of filing: 19.12.2023
(51) Int. Cl.: H01M 10/0587, H01M 4/133, H01M 4/1393, H01M 4/587, H01M 4/38, H01M 4/62, H01M 4/04, H01M 50/213, H01M 50/244, H01M 4/02

(54) **ELECTRODE ASSEMBLY, MANUFACTURING METHOD THEREFOR, SECONDARY BATTERY, BATTERY PACK, AND MOVING MEANS**

(30) Priority: 23.12.2022 KR 20220183192
(71) Applicant: LG Energy Solution, Ltd., Seoul 07335 (KR)
(72) Inventor: LEE, Jangho, Daejeon 34122 (KR)
(74) Representative: Goddar, Heinz J.
(86) International application number: PCT/KR2023/020964
(87) International publication number: WO 2024/136398

(57) **Abstract**

The present invention relates to an electrode assembly, in which a positive electrode, a first separator, a negative electrode, and a second separator are wound, in which the negative electrode includes a negative electrode current collector, and a negative electrode active material layer stacked on at least a part of one surface or two opposite surfaces of the negative electrode current collector, in which the negative electrode active material layer includes a first negative electrode active material layer positioned at a winding tip, and a second negative electrode active material layer positioned at a rear end of the first negative electrode active material layer, in which the first negative electrode active material layer and the second negative electrode active material layer have different properties.

## Description

### [Technical Field]

This application claims priority to and the benefit of Korean Patent Application No. 10-2022-0183192 filed with the Korean Intellectual Property Office on December 23, 2022, the entire contents of which are incorporated herein by reference.

The present invention relates to an electrode assembly, a method of manufacturing the same, a secondary battery, a battery pack, and a transport means.

### [Background Art]

In general, a secondary battery refers to a battery that may be charged and discharged, unlike a primary battery that cannot be charged. The secondary batteries are widely used in cutting-edge electronic device fields such as phones, laptop computers, and camcorders.

The stability of the secondary battery may be ensured by performing a stability test that compresses one surface of the secondary battery with a pressing machine and then measures an internal short circuit.

Depending on shapes of battery casings, the secondary batteries are classified into a cylindrical or angular battery in which an electrode assembly is embedded in a cylindrical or angular metal battery casing, and a pouch-type battery in which an electrode assembly is embedded in a pouch-type battery casing provided in the form of a laminated aluminum sheet.

In addition, the electrode assembly embedded in the battery casing is a power generation element configured to be chargeable and dischargeable and having a stacked structure including a positive electrode, a separator, and a negative electrode. The electrode assemblies are classified into a folding-type electrode assembly (jelly-roll-type electrode assembly) made by winding elongated sheet-type positive and negative electrodes coated with an active material in a state in which a separator is interposed between the positive and negative electrodes, and a stack-type electrode assembly made by sequentially stacking a plurality of positive and negative electrodes each having a predetermined size in a state in which separators are interposed between the positive and negative electrodes. Among the electrode assemblies, the advantage of the jelly-roll-type electrode assembly is that the jelly-roll-type electrode assembly is easy to manufacture and has a high energy density per weight.

The jelly-roll-type electrode assembly may be configured by winding the positive electrode and the negative electrode. In this case, the positive electrode and the negative electrode may be wound in a state in which the separator is interposed between the positive electrode and the negative electrode. However, as charging/discharging cycles are repeated several hundreds to thousands of times, the jelly-roll-type electrode assembly may be contracted and expanded, and the safety of the secondary battery may be greatly degraded by delamination of a negative electrode active material, deformation in shape of the electrode assembly, and the occurrence of cracks in a current collector.

### [Detailed Description of the Invention]

### [Technical Problem]

The present invention has been made in an effort to solve the above-mentioned problem in the related art, and an object of the present invention is to provide an electrode assembly and a method of manufacturing the same, which are capable of preventing delamination of an electrode active material when an electrode is contracted/expanded as a secondary battery is charged/discharged.

### [Technical Solution]

An embodiment of the present invention provides an electrode assembly, in which a negative electrode, a separator, and a positive electrode are wound, in which the negative electrode includes: a negative electrode current collector; and a negative electrode active material layer stacked on at least a part of one surface or two opposite surfaces of the negative electrode current collector, in which the negative electrode active material layer includes: a first negative electrode active material layer positioned at a winding tip; and a second negative electrode active material layer positioned at a rear end of the first negative electrode active material layer, and in which the first negative electrode active material layer and the second negative electrode active material layer have different properties.

The embodiment of the present invention provides the electrode assembly in which the first negative electrode active material layer has a lower expansion ratio than the second negative electrode active material layer.

The embodiment of the present invention provides the electrode assembly in which the first negative electrode active material layer has higher bonding strength than the second negative electrode active material layer.

The embodiment of the present invention provides the electrode assembly in which the stacking area of the first negative electrode active material layer is 30% or less of a stacking area of the second negative electrode active material layer.

The embodiment of the present invention provides a secondary battery including: the electrode assembly; a battery casing having an opening portion opened at one side thereof and configured to accommodate the electrode assembly; and a cap assembly coupled to the opening portion of the battery casing.

Another embodiment of the present invention provides a battery pack including the secondary battery.

Still another embodiment of the present invention provides a transport means including the battery pack.

Yet another embodiment of the present disclosure provides a method of manufacturing an electrode assembly, in which a negative electrode, a separator, and a positive electrode are wound, the method including: a negative electrode manufacturing step of manufacturing the negative electrode by applying negative electrode slurry onto at least a part of one surface or two opposite surfaces of a negative electrode current collector, in which the negative electrode manufacturing step includes: a first coating step of manufacturing a first negative electrode active material layer by applying first negative electrode slurry onto a winding tip; and a second coating step of manufacturing a second negative electrode active material layer by applying second negative electrode slurry onto a rear end of the first negative electrode active material layer, and in which the first negative electrode slurry and the second negative electrode slurry are different in compositions.

The embodiment of the present invention provides the method in which the first negative electrode slurry includes graphite, and the second negative electrode slurry includes graphite and silicon.

The embodiment of the present invention provides the method in which a binder content of the first negative electrode slurry is larger than a binder content of the second negative electrode slurry.

The embodiment of the present invention provides the method in which the application of the negative electrode slurry is performed by applying the negative electrode slurry onto one surface or two opposite surfaces of the negative electrode current collector by a cross-sectional coating method.

The embodiment of the present invention provides the method in which the cross-sectional coating method performs coating by a slot die coater, a spray coater, a gravure roll coater, or a DM coater.

The embodiment of the present invention provides the method in which the cross-sectional coating method performs coating by a double layer slot die coater (DLD).

### [Advantageous Effects]

According to the electrode assembly and the method of manufacturing the same according to the embodiment of the present invention, the plurality of active material layers, which is different in expansion/contraction ratios and bonding strength, is stacked on one surface or two opposite surfaces of the current collector, thereby reducing deformation of the electrode assembly, preventing cracks in the electrode current collector and disconnection or short circuit, and improving stability of the secondary battery.

The active material layer with high bonding strength is stacked at the position adjacent to the electrode assembly core part, thereby preventing delamination of the electrode active material caused by expansion.

### [Brief Description of Drawings]

FIG. 1 is a cross-sectional view illustrating an electrode assembly according to an embodiment of the present invention.
FIG. 2 is a cross-sectional view illustrating a negative electrode according to the embodiment of the present invention.
FIG. 3 is a flowchart illustrating a negative electrode manufacturing step according to the embodiment of the present invention.
FIG. 4 is a cross-sectional view illustrating a secondary battery including the electrode assembly according to the embodiment of the present invention.

### [Explanation of Reference Numerals and Symbols]

1000: Secondary battery
100: Electrode assembly
110: Positive electrode
120: Negative electrode
121: Negative electrode current collector
122: Negative electrode active material portion
122a: First negative electrode active material layer
122b: Second negative electrode active material layer
130: First separator
140: Second separator
200: Battery casing
210: Beading portion
220: Crimping portion
300: Cap assembly
310: Top cap
320: Safety vent
330: Current interruptive device
340: Sealing gasket
350: CID gasket
C: Core part
10: Double layer slot die coater
11: Discharge port
11a: First discharge port
11b: Second discharge port
12a: First negative electrode slurry
12b: Second negative electrode slurry

### [Best Mode]

The detailed description of the present invention is provided to completely explain the present invention to a person with ordinary skill in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various embodiments, and specific embodiments will be described in detail in the detailed description. However, the description of the embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, the drawings are intended to illustratively describe the present invention, and the scope of the present invention is not limited by the drawings.

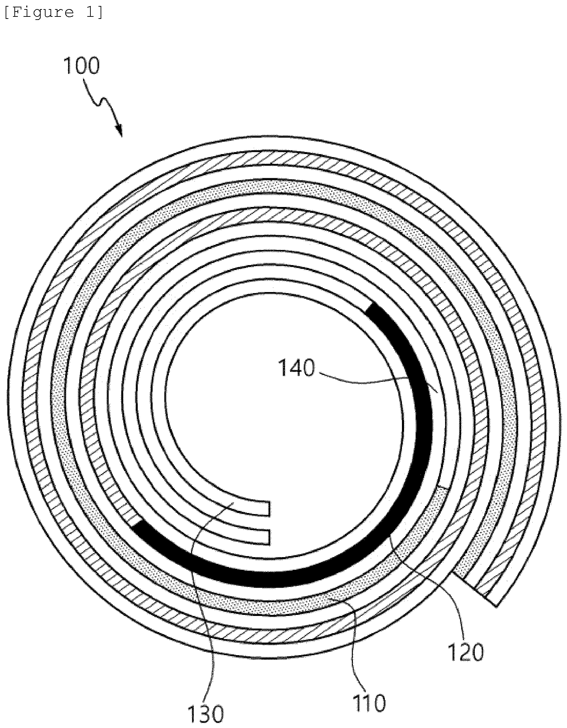

FIG. 1 is a cross-sectional view illustrating an electrode assembly 100 according to an embodiment of the present invention.

The electrode assembly 100 refers to a power generation element that may be charged and discharged and include a positive electrode 110, a negative electrode 120, and separators 130 and 140 positioned between the positive electrode 110 and the negative electrode 120.

The electrode assembly 100 may include a jelly-roll structure in which the first separator 130, the negative electrode 120, the second separator 140, and the positive electrode 110 are sequentially stacked and wound.

The positive electrode 110 may include a positive electrode current collector, a positive electrode active material portion, and a positive electrode non-coated portion. The positive electrode current collector may include a thin metal plate excellent in conductivity, e.g., an aluminum (Al) foil.

The positive electrode 110 is made by coating any one of or both two opposite surfaces of the positive electrode current collector with positive electrode slurry including a positive electrode active material. A region in which the positive electrode slurry is applied is the positive electrode active material portion, and a region in which no positive electrode slurry is applied is the positive electrode non-coated portion. Because no positive electrode active material layer is applied onto the positive electrode non-coated portion, the positive electrode non-coated portion may be joined to a first electrode tab.

The positive electrode slurry may include a positive electrode active material, a binder, a conductive material, a solvent, and an additive. The positive electrode active material may include lithium cobalt oxide having high working voltage and excellent capacity characteristics, lithium nickel oxide having high reversible capacity and used to easily implement a high-capacity battery, lithium nickel cobalt oxide made by substituting a part of nickel with cobalt, lithium nickel cobalt metal oxide made by substituting a part of nickel with manganese, cobalt, or aluminum, lithium manganese-based oxide having excellent thermal stability and made with low costs, and lithium iron phosphate having excellent stability.

The binder may include any one or more of a polyvinylidene fluoride (PVdF) binder, a nitrile butadiene rubber (NBR) binder, a styrene butadiene rubber (SBR) binder, and a carboxymethylcellose (CMC) binder.

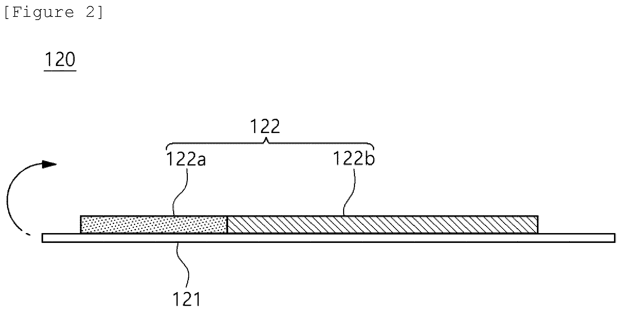

FIG. 2 is a cross-sectional view illustrating the negative electrode 120 according to the embodiment of the present invention. The negative electrode 120 may include a negative electrode current collector 121, a negative electrode active material portion 122, and a negative electrode non-coated portion. The negative electrode current collector 121 may include a thin metal plate excellent in conductivity, e.g., a copper (Cu) or nickel (Ni) foil.

The negative electrode 120 is made by coating one surface or two opposite surfaces of the negative electrode current collector 121 with negative electrode slurry including a negative electrode active material. The negative electrode active material portion 122 is formed by being coated with the negative electrode slurry or applying the negative electrode slurry. The negative electrode non-coated portion is a region in which no negative electrode slurry is applied or a region that is not coated with the negative electrode slurry. The negative electrode non-coated portion is a region in which the negative electrode current collector is exposed. Because no negative electrode slurry is applied onto the negative electrode non-coated portion, the negative electrode non-coated portion may be joined to a second electrode tab.

The first and second electrode tabs may serve to transfer electrons, which are collected on the current collector, to an external circuit and protrude in directions in which the first and second electrode tabs face each other with respect to the electrode assembly having the jelly-roll structure.

The negative electrode slurry may include a negative electrode active material, a binder, a conductive material, a solvent, and an additive. For example, the negative electrode active material may be crystalline carbon, amorphous carbon, carbon composite body, carbon material such as carbon fiber, natural graphite, lithium metal, lithium alloy, or the like. In this case, for example, the negative electrode active material may further include non-graphite-based SiO (silica), SiC (silicon carbide), or the like to design a high capacity.

The negative electrode active material portion 122 may include a first negative electrode active material layer 122a stacked at a winding tip adjacent to a center C of the jelly-roll structure, and a second negative electrode active material layer 122b positioned at a rear end of the first negative electrode active material layer 122a.

The rear end of the first negative electrode active material layer 122a and a front end of the second negative electrode active material layer 122b may be positioned to be in contact with each other. In this case, the front ends of the first and second negative electrode active material layers 122a and 122b mean ends positioned in a direction of a winding start point direction, and the rear ends of the first and second negative electrode active material layers 122a and 122b mean ends facing the front ends.

The rear end of the first negative electrode active material layer 122a and the front end of the second negative electrode active material layer 122b are in contact with each other, such that an area of the negative electrode non-coated portion may be minimized, thereby preventing a decrease in capacity of the secondary battery including the electrode assembly 100. That is, if the rear end of the first negative electrode active material layer 122a and the front end of the second negative electrode active material layer 122b are spaced apart from each other, an area of the negative electrode non-coated portion increases, which may cause a problem of a decrease in capacity of the secondary battery. Further, a space is formed between the rear end of the first negative electrode active material layer 122a and the front end of the second negative electrode active material layer 122b, which may cause a problem of winding uniformity of the electrode assembly 100.

The first negative electrode active material layer 122a and the second negative electrode active material layer 122b may have difficult physical properties. In the embodiment, the first negative electrode active material layer 122a and the second negative electrode active material layer 122b may have different rates of deformation in shapes caused when the electrode assembly 100 is charged/discharged. That is, the first negative electrode active material layer 122a and the second negative electrode active material layer 122b may have different thermal expansion ratios.

In the embodiment, a thickness expansion ratio of the first negative electrode active material layer 122a may be 10 to 20%. In particular, the thickness expansion ratio of the first negative electrode active material layer 122a may be 10 to 18%, more particularly 10 to 15%. Further, a thickness expansion ratio of the second negative electrode active material layer 122a may be 15 to 30%. In particular, the thickness expansion ratio of the second negative electrode active material layer 122a may be 15 to 28%, more particularly 15 to 25%.

The first negative electrode active material layer 122a may have a lower thickness expansion ratio than the second negative electrode active material layer 122b. A difference between the thickness expansion ratio of the first negative electrode active material layer 122a and the thickness expansion ratio of the second negative electrode active material layer 122b may be 1 to 15%.

The thickness expansion ratios of the first and second negative electrode active material layers 122a and 122b are calculated by using a thickness of the electrode, which is measured before the secondary battery including the electrolyte and the electrode assembly according to the present invention is charged, and a thickness of the electrode measured after disassembling the secondary battery after the secondary battery is fully charged with a voltage up to 4.3 V.

As the negative electrode 120 becomes close to the center C of the jelly-roll structure, i.e., the winding tip, at which the winding is started, has a small radius of curvature, the negative electrode active material portion 122 is expanded and contracted in a narrow space when the electrode assembly 100 is charged/discharged, which may cause a problem in that the frequency of the occurrence of the separation of the negative electrode active material portion 122 is high, and the shape of the jelly-roll structure is deformed.

Because the first negative electrode active material layer 122a positioned at the winding tip of the negative electrode 120 according to the present invention has a lower thickness expansion ratio than the second negative electrode active material layer 122b, the amounts of expansion volumes are similar in respect to radii of curvature and spaces of the winding tip and the winding rear end of the jelly-roll structure, thereby minimizing the deformation in shape of the jelly-roll structure. Further, the expansion volume of the first negative electrode active material layer 122a at the winding tip of the negative electrode 120 may decrease, which may prevent the separation of the negative electrode active material portion 122.

Further, because the first negative electrode active material layer 122a has higher bonding strength than the second negative electrode active material layer 122b, a bonding force between the negative electrode current collector 121 and the first negative electrode active material layer 122 of the negative electrode active material portion 122 may be higher than a repulsive force between the negative electrode current collector 121 and the negative electrode active material portion 122 because the expansion of the negative electrode active material portion 122.

In the embodiment, the bonding force of the first negative electrode active material layer 122a with respect to the negative electrode current collector may be 15 to 35. In particular, the bonding force of the first negative electrode active material layer 122a may be 18 to 32, more particularly 20 to 30. Further, the bonding force of the second negative electrode active material layer 122a with respect to the negative electrode current collector may be 5 to 25. In particular, the bonding force of the second negative electrode active material layer 122a may be 8 to 23, more particularly 10 to 20.

A difference between the bonding force of the first negative electrode active material layer 122a and the bonding force of the second negative electrode active material layer 122b may be 10 to 20.

In order to measure the bonding forces of the first and second negative electrode active material layers 122a and 122b with respect to the negative electrode current collector, a double-sided tape of 2.0 cm X 5 cm is attached to a slide glass after one surface of the negative electrode current collector is coated with the first and second negative electrode active material layers 122a and 122b, a negative electrode portion including the first negative electrode active material layer 122a and a negative electrode portion including the second negative electrode active material layer 122b are cut into a size of 2.0 cm X 10 cm, and then the negative electrode portions are attached to the double-sided tape by applying a predetermined force of 2 kg by a roller. 90° peeling strength is measured by peeling the negative electrode current collector off the slide glass to which the negative electrode is attached.

Therefore, according to the negative electrode 120 according to the present invention, even though the first negative electrode active material layer 122a expands in volume, the first negative electrode active material layer 122a is not delaminated from the negative electrode current collector 121, which may prevent deformation of the jelly-roll shape.

Further, the negative electrode 120 according to the present invention may prevent a situation in which the first negative electrode active material 122a is delaminated by the contraction and expansion and protrudes in a direction in which the negative electrode current collector 121 or the separators 130 and 140 are positioned, a pressure is concentrated on the delaminated first negative electrode active material layer 122a, and the negative electrode current collector 121 or the separators 130 and 140 are cracked and short-circuited.

The first negative electrode active material layer 122a may have a smaller capacity than the second negative electrode active material layer 122b. In other words, the second negative electrode active material layer 122b may have a larger capacity than the first negative electrode active material layer 122a.

The capacity of the secondary battery including the electrode assembly 100 according to the present invention may be determined by the second negative electrode active material layer 122b. Therefore, the second negative electrode active material layer 122b needs to have a larger stacking area than the first negative electrode active material layer 122a, and the stacking area of the first negative electrode active material layer 122a may be 30% or less based on an overall area of 100% of the negative electrode active material. In particular, the stacking area of the first negative electrode active material layer 122a may be 1 to 20% or less, more particularly 5 to 15% or less.

In case that the area of the first negative electrode active material layer 122a satisfies the numerical value of the electrode assembly 100 according to the present invention, the deformation in shape of the electrode assembly 100, the disconnection of the negative electrode current collector 121 and the separators 130 and 140, and the delamination of the negative electrode active material portion 122 may be minimized, and the high-capacity, high-energy density secondary battery may be provided. Further, the stacking area of the first negative electrode active material layer 122a may increase, which may prevent a problem of a decrease in overall capacity of the secondary battery.

The separators 130 and 140 may each serve to prevent an internal short circuit that may be caused by contact between the positive electrode 110 and the negative electrode 120. The separators 130 and 140 may each include a porous material so that ions move smoothly between the electrodes.

In the embodiment, the separators 130 and 140 may each include a base layer made of a porous material. For example, the base layer may include any one selected from a group consisting of polyethylene (PE), polystyrene (PS), polypropylene (PP), and a copolymer of polyethylene (PE) and polypropylene (PP).

In another embodiment, the separators 130 and 140 may each include a safety reinforced separator (SRS). That is, the separators 130 and 140 may include the base layer made of a porous material, and a coating layer made by coating the base layer with a slurry mixture made by mixing inorganic particles and binder polymer. In particular, the coating layer has a porous structure including ceramic particles and included in a base of the separator and has a uniform porous structure formed by empty spaces (interstitial volume) between the ceramic particles which are components of the active layer.

The coating layer may include ceramic particles including at least one selected from a group consisting of alumina, silica, TiO₂, SiC, and MgAl₂O₄. The coating layer included as described above may improve the safety of the electrode assembly. Further, the coating layer may further include lithium salt.

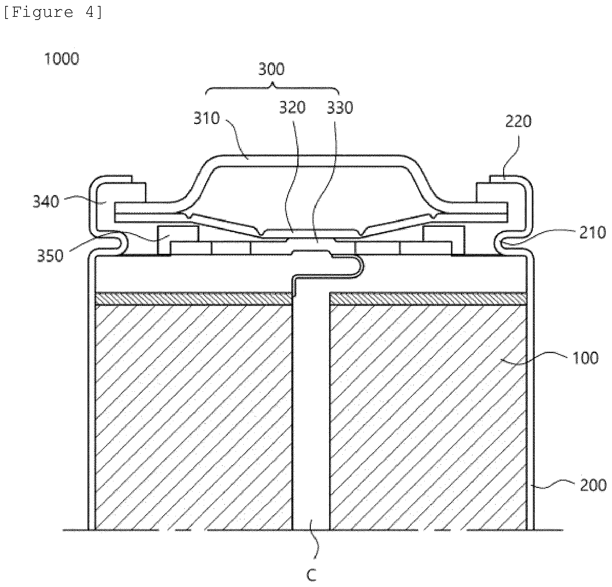

FIG. 4 is a cross-sectional view illustrating a secondary battery 1000 including the electrode assembly 100 according to the embodiment of the present invention. The secondary battery 1000 according to the present invention may include the electrode assembly 100, a battery casing 200, and a cap assembly 300.

The battery casing 200 may have a column structure having a space therein. The internal space of the battery casing 200 may accommodate an electrolyte (not illustrated) and the electrode assembly 100 including the electrodes and the separator. The battery casing 200 may have a structure opened at one side thereof (hereinafter, referred to as an 'opening portion'), and the other side of the battery casing 200 may have a sealed structure. In this case, one side and the other side of the battery casing 200 may mean ends positioned on the upper and lower portions in the gravitational direction or along the central axis of the battery casing 200.

A beading portion 210 may be provided at the upper side of the opened battery casing 200 and folded in a direction toward a center of the secondary battery 1000. Further, the battery casing 200 may have a crimping portion 220 provided above the beading portion 210. That is, the crimping portion 220 may be positioned at an uppermost side of the battery casing 200. In this case, the upper side means a region in a direction toward the opening portion from the center of the battery casing 200.

The battery casing 200 may be made of a lightweight conductive metallic material such as aluminum or aluminum alloy.

The cap assembly 300 may be coupled to an opened side of the battery casing 200 and include a top cap 310, a safety vent 320, and a current interruptive device 330.

The top cap 310 may be positioned at the uppermost side of the cap assembly 300 and protrude in a direction opposite to the direction toward the center of the battery casing 200. The top cap 310 may serve as an electrode terminal so that a protruding portion thereof is electrically connected to the outside. For example, the top cap 310 may serve as a positive electrode terminal.

The top cap 310 may have a sealing gasket 340 coupled to an edge of the top cap 310. The sealing gasket 340 may be positioned in the crimping portion 220 of the battery casing 200. The sealing gasket 340 may increase sealability between the top cap 310 and the battery casing 200.

The top cap 310 may include a protruding portion protruding upward, a rim portion being in contact with and coupled to the sealing gasket 340, and a first connection portion configured to connect the protruding portion and the rim portion.

The safety vent 320 may be positioned below the top cap 310 and electrically connected to the top cap 310. At least a part of a surface of the safety vent 320, which faces the top cap 310, may be in contact with the top cap 310. The safety vent 320 in contact with the top cap 310 by a predetermined length from an end thereof, and a portion excluding the contact length may be positioned to be spaced apart from the top cap 310 at a predetermined distance. Further, a portion of the safety vent 320, which is in contact with the top cap 310, may be coupled to the sealing gasket 340.

A spacing distance between the safety vent 320 and the top cap 310 may increase in a direction from the region, in which the safety vent 320 is in contact with the top cap 310, toward the center of the safety vent 320.

The safety vent 320 may include a contact portion being in contact with the top cap 310, a central portion positioned at the center of the safety vent 320 and being in contact with the current interruptive device, and a second connection portion configured to connect the contact portion and the central portion. Further, the safety vent 320 may have bent portions (or notches) provided on the contact portion, the second connection portion, and a portion with which the second connection portion and the central portion are in contact.

In the embodiment, an end of the safety vent 320 may be provided in a direction perpendicular to an axial direction of the battery casing 200. In this case, like the safety vent 320, the top cap 310 may be provided in the direction perpendicular to the axial direction of the battery casing 200. That is, the safety vent 320 and the top cap 310 may be provided in parallel with each other.

In another embodiment, the end of the safety vent 320 is bent, such that the safety vent 320 may surround an outer peripheral surface of the top cap 310.

In the secondary battery 1000 according to the present invention, when the electrode assembly 100 and the electrolyte, which are accommodated in the battery casing 200, react, gas or heat is generated, such that an internal pressure increases.

When the pressure in the secondary battery 1000 is increased, the safety vent 320 receives a force in the direction of the top cap 310, such that the bent portion bursts, and the gas in the secondary battery 1000 is discharged.

The current interruptive device (CID) 330 may be positioned below the safety vent 320 and have at least a part connected to the safety vent 320.

When the safety vent 320 bursts as the internal pressure of the secondary battery 1000 increases, the current interruptive device 330 is separated from the safety vent 320 and blocks the electric current.

In more detail, the current interruptive device 330 may have a central portion connected to the safety vent 320 and include a connection portion protruding in a direction in which the safety vent 320 is positioned, an edge portion excluding the connection portion, and a coupling portion configured to connect the connection portion and the edge portion. The coupling portion may be provided as a plurality of coupling portions positioned to be spaced apart from one another.

When the safety vent 320 is deformed in the direction in which the top cap 310 is positioned, the coupling portion may be disconnected, and the connection portion may be separated from the edge portion. That is, the connection portion is separated in the direction of the top cap 310 in the state in which the connection portion is connected to the safety vent 320.

A CID gasket 350 may serve to surround an edge of the current interruptive device 330 and electrically separate the edge portion, the coupling portion, and the safety vent 320, except for the connection portion of the current interruptive device 330.

A battery pack according to the present invention may include one or more secondary batteries described above. Specifically, the battery pack includes a structure in which the secondary battery is included in a pack housing.

Further, the battery pack has a high output and a high capacity.

According to the embodiment of the present invention, a transport means including the battery pack is provided. The transport means according to the embodiment is excellent in stability and safety because the transport means uses the battery pack having a high output and a large capacity.

A method of manufacturing the electrode assembly according to the present invention may include a negative electrode manufacturing step S10, a positive electrode manufacturing step S20, and a winding step S30 of winding the negative electrode, the separator, and the positive electrode.

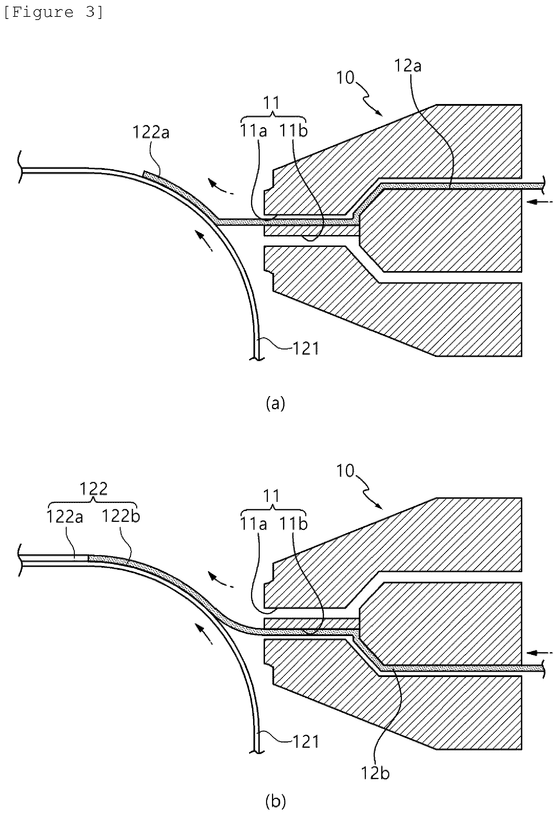

FIG. 3 is a flowchart illustrating the negative electrode manufacturing step S10 according to the embodiment of the present invention. In the negative electrode manufacturing step S10, the negative electrode is manufactured by coating at least a part of one surface or two opposite surfaces of the negative electrode current collector with the negative electrode slurry.

In the embodiment, in case that the negative electrode slurry is applied only onto one surface of the negative electrode current collector, the negative electrode manufacturing step S10 may include a step of applying the negative electrode slurry onto one surface of the negative electrode current collector.

In another embodiment, in case that the negative electrode slurry is applied onto the two opposite surfaces of the negative electrode current collector, the negative electrode manufacturing step S10 may include a step of applying the negative electrode slurry onto one surface of the negative electrode current collector, and a step of applying the negative electrode slurry onto the other surface of the negative electrode current collector.

That is, in the negative electrode manufacturing step S10, a cross-sectional coating method may be used as the method of applying the negative electrode slurry.

The cross-sectional coating method may coat one surface or two opposite surfaces of the negative electrode current collector or apply the negative electrode slurry by using a slot die coater, a spray coater, a gravure roll coater, or a DM coater.

The negative electrode manufacturing step S10 may include a first coating step S11 of manufacturing the first negative electrode active material layer by applying the first negative electrode slurry onto the winding tip, and a second coating step S12 of manufacturing the second negative electrode active material layer by applying the second negative electrode slurry onto the rear end of the first negative electrode active material layer.

Therefore, in the negative electrode manufacturing step S10 according to the present invention, one surface or two opposite surfaces of the negative electrode current collector may be coated with the negative electrode slurry by the cross-sectional coating method, and the cross-sectional coating method may include a method of coating one surface or two opposite surfaces of the negative electrode current collector or applying the negative electrode slurry by using a double layer slot die coater (DLD) .

Further, the negative electrode manufacturing step S10 may further include a step of controlling the application of the first negative electrode slurry and the second negative electrode slurry by controlling the double layer slot die coater.

A double layer slot die coater 10 may include a discharge port 11 through which the negative electrode slurry is discharged. The discharge port 11 may include a first discharge port 11a from which first negative electrode slurry 12a is discharged, and a second discharge port 11b from which second negative electrode slurry 12b is discharged. Further, the double layer slot die coater 10 may further include a first negative electrode slurry supply part configured to supply the first negative electrode slurry 12a to the first discharge port 11a, a second negative electrode slurry supply part configured to supply the second negative electrode slurry 12a to the second discharge port 11b, and a controller configured to control the first and second negative electrode slurry supply parts.

The negative electrode manufacturing step S10 may include a step of supplying the first negative electrode slurry to the first discharge port by controlling the first negative electrode slurry supply part by the controller, a step of applying the first negative electrode slurry, which is discharged from the first discharge port as the negative electrode current collector moves, onto one surface of the negative electrode current collector, a step of stopping the supply of the first negative electrode slurry by controlling the first negative electrode slurry supply part by the controller, a step of supplying the second negative electrode slurry to the second discharge port by controlling the second negative electrode slurry supply part by the controller, and a step of applying the second negative electrode slurry onto the rear end of the first negative electrode slurry as the negative electrode current collector moves.

The first negative electrode slurry and the second negative electrode slurry may be different in compositions. The negative electrode slurry may include a negative electrode active material, a binder, a conductive material, a solvent, and an additive.

The first negative electrode slurry may include graphite as the negative electrode active material, and the second negative electrode slurry may include any one or more of graphite, silicon, silica, and silicon carbide as the negative electrode active material. The first negative electrode slurry may include only graphite as the negative electrode active material, such that an expansion ratio of the negative electrode active material decreases during the charging/discharging process, which may prevent the negative electrode active material from separating from the negative electrode current collector. Further, the second negative electrode slurry may include any one or more of silicon, silica, and silicon carbide as the negative electrode active material, thereby enabling the high-capacity design.

Further, the binder content of the first negative electrode slurry may be larger than the binder content of the second negative electrode slurry. Because the first negative electrode slurry has a large binder content, the bonding strength with the negative electrode current collector may increase.

Therefore, the first negative electrode slurry with the increased bonding strength has a small radius of curvature of the jelly-roll structure and thus has a high density of the negative electrode slurry. Therefore, during the process of charging/discharging the electrode assembly, the expansion volume of the negative electrode active material is large, which may prevent a problem of the very frequent separation of the negative electrode active material from the negative electrode current collector.

In the embodiment, the binder content of the first negative electrode slurry may be 0.5 to 3 wt.% based on the overall content of 100 wt.% of the first negative electrode slurry. In particular, the first negative electrode slurry may account for 0.6 to 2 wt.%, more particularly 0.7 to 1.5 wt. % .

While the present invention has been described above with reference to the exemplary embodiments, it may be understood by those skilled in the art that the present invention may be variously modified and changed without departing from the spirit and scope of the present invention disclosed in the claims.

## Claims

1. An electrode assembly, in which a positive electrode, a first separator, a negative electrode, and a second separator are wound,
wherein the negative electrode comprises:
a negative electrode current collector; and
a negative electrode active material layer stacked on at least a part of one surface or two opposite surfaces of the negative electrode current collector,
wherein the negative electrode active material layer comprises:
a first negative electrode active material layer positioned at a winding tip; and
a second negative electrode active material layer positioned at a rear end of the first negative electrode active material layer, and
wherein the first negative electrode active material layer and the second negative electrode active material layer have different properties.

2. The electrode assembly of claim 1, wherein the first negative electrode active material layer has a lower thickness expansion ratio than the second negative electrode active material layer.

3. The electrode assembly of claim 1, wherein the first negative electrode active material layer has higher bonding strength than the second negative electrode active material layer.

4. The electrode assembly of claim 1, wherein a stacking length of the first negative electrode active material layer is 30% or less based on an overall length of 100% of the negative electrode current collector.

5. A secondary battery comprising:
the electrode assembly according to any one of claims 1 to 4;
a battery casing having an opening portion opened at one side thereof and configured to accommodate the electrode assembly; and
a cap assembly coupled to the opening portion of the battery casing.

6. A battery pack comprising the secondary battery according to claim 5.

7. A transport means comprising the battery pack according to claim 6.

8. A method of manufacturing an electrode assembly, in which a negative electrode, a separator, and a positive electrode are wound, the method comprising:
a negative electrode manufacturing step of manufacturing the negative electrode by applying negative electrode slurry onto at least a part of one surface or two opposite surfaces of a negative electrode current collector,
wherein the negative electrode manufacturing step comprises:
a first coating step of manufacturing a first negative electrode active material layer by applying first negative electrode slurry onto a winding tip; and
a second coating step of manufacturing a second negative electrode active material layer by applying second negative electrode slurry onto a rear end of the first negative electrode active material layer, and
wherein the first negative electrode slurry and the second negative electrode slurry are different in compositions.

9. The method of claim 8, wherein the first negative electrode slurry includes graphite, and the second negative electrode slurry includes graphite and silicon.

10. The method of claim 8, wherein a binder content of the first negative electrode slurry is larger than a binder content of the second negative electrode slurry.

11. The method of claim 8, wherein the application of the negative electrode slurry is performed by applying the negative electrode slurry onto one surface or two opposite surfaces of the negative electrode current collector by a cross-sectional coating method.

12. The method of claim 11, wherein the cross-sectional coating method performs coating by a slot die coater, a spray coater, a gravure roll coater, or a DM coater.

13. The method of claim 11, wherein the cross-sectional coating method performs coating by a double layer slot die coater (DLD).
